# EUROPÄISCHE PATENTSCHRIFT

(11) **EP 1 835 239 B1**
(45) Veröffentlichungstag und Bekanntmachung des Hinweises auf die Patenterteilung: **17.09.2014**
(21) Anmeldenummer: 07004396.3
(22) Anmeldetag: 03.03.2007
(51) Int. Cl.: F16K 15/02, F04D 19/00

(54) **Rückschlagklappenvorrichtung**
Non-return valve device
Dispositif de clapet de recul

(30) Priorität: 15.03.2006 DE 202006004839 U
(43) Veröffentlichungstag der Anmeldung: 19.09.2007
(73) Patentinhaber: MAICO Elektroapparate-Fabrik GmbH, 78056 Villingen-Schwenningen (DE)
(72) Erfinder: Stricker, Klaus, 78658 Zimmern o. R. (DE); Pietsch, Lars, 78052 Villingen-Schwenningen (DE); Hann, Johann, 78056 VS-Schwenningen (DE)
(74) Vertreter: Grosse, Rainer

(56) Entgegenhaltungen:
- EP-A- 0 685 691
- DE-A1- 19 849 863
- DE-B3- 10 245 403
- US-A- 3 009 475
- US-A- 4 094 336

## Beschreibung

Die Erfindung betrifft eine Luftweg mit einer Rückschlagklappenvorrichtung zum Verschließen derselben, mit mindestens einer Absperrklappe, die von einer im Luftweg strömenden Luftströmung entgegen einer Schließkraft geöffnet wird.

Derartige Rückschlagklappenvorrichtungen sind bei Wandeinbauventilatoren bekannt. Ein einen Luftweg bildender Anschlussstutzen ist mit einer Rückschlagklappe versehen, die mittels einer Feder in Schließstellung gedrängt wird. Wird der Ventilator in Betrieb genommen, so bewirkt die Luftströmung ein Öffnen der Absperrklappe gegen die Federkraft. Bei ausgeschaltetem Ventilator schließt sich die Absperrklappe durch die Federkraft. Tritt ein Überdruck, zum Beispiel durch eine Windlast auf ein Entlüftungsrohrsystem, auf, an das der vorstehend erwähnte Ventilator angeschlossen ist, so wird die Rückschlagklappe von dem Überdruck geschlossen und hierdurch ein rückströmender Luftstrom vermieden. Die Absperrklappe der bekannten Einrichtung legt sich in Schließstellung mit ihrem umlaufenden Randbereich gegen eine Dichtfläche des Luftwegs. Durch den Flächenkontakt kann es zu Funktionsstörungen, beispielsweise einem Haften des Klappenrandes, kommen, sodass die Funktion der Absperrklappe nicht mehr gewährleistet ist. Insbesondere bei mit Fremdstoffen belasteten Luftströmen kommt es aufgrund einer Verschmutzung zu dem erwähnten Effekt. Eine deartige Rückschalgklappenvorrichtung ist aus DE 102 45 403 bekannt.

Der Erfindung liegt die Aufgabe zugrunde, eine Rückschlagklappenvorrichtung der eingangs genannten Art zu schaffen, die funktionssicher arbeitet, sicher und hinreichend dicht schließt und selbst bei starker Beanspruchung leichtgängig bewegbar ist und stets zuverlässig öffnet.

Diese Aufgabe wird durch die Merkmale von Anspruch 1 gelöst. In der Schließstellung kontaktiert die Absperrklappe demgemäß nicht den Luftweg, sondern hält zu diesem einen Abstand, nämlich das erwähnte Spiel, ein. Dieses Spiel ist hinreichend klein gewählt, wodurch trotz des durch das Spiel resultierenden Spalts eine ausreichende, die Funktionen nicht beeinträchtigende Dichtwirkung vorliegt. Durch die berührungslos arbeitende Absperrklappe können Verklebungen, Verklemmungen und so weiter nicht auftreten, d.h., die Absperrklappe lässt sich leichtgängig bewegen und ist stets mit nur sehr geringer Kraft zu öffnen. Um die Schließstellung zu definieren, ist die Anschlagvorrichtung vorgesehen, d.h., in einer definierten Zone legt sich die Absperrklappe mit einem Element gegen ein Element des Luftwegs, wobei die Fläche und/oder Länge der aufeinander liegenden Elemente sehr klein gewählt ist, sodass es nicht zu Funktionsstörungen, zum Beispiel durch Verkleben oder dergleichen, kommt. Möglich ist zum Beispiel die Ausbildung einer Punktauflage, die ein oder mehrere Punktkontakte beinhalten kann oder eine nur kurze Linienauflage. Wesentlich ist, dass die Länge des Klappenrands wesentlich größer ist, als die Länge der Auflage, sodass also nur in einer sehr kleinen Zone -im Vergleich zu dem Klappenrand- ein Aneinanderliegen von Teilen in der Schließstellung der Absperrklappe vorliegt.

Gemäß der Erfindung ist vorgesehen, dass die Schließfläche des Luftwegs eine im Wesentlichen radiale Schließfläche ist. Zusätzlich ist vorgesehen , dass die Schließfläche des Luftwegs eine im Wesentlichen axiale Schließfläche ist. Der Klappenrand ist als Radial-Klappenrand ausgebildet. Zusätzlich ist vorgesehen, dass der Klappenrand als Axial-Klappenrand ausgebildet ist. Demzufolge liegen sich in Schließstellung die radiale Schließfläche des Luftwegs und der Radial-Klappenrand mit geringem Spiel gegenüber. Der verbleibende Spalt ist hinreichend klein, sodass eine Dichtfunktion gewährleistet ist. Die axiale Schließfläche des Luftwegs liegt dem Axial-Klappenrand mit Spiel gegenüber, sodass hierdurch die Abdichtung geschaffen wird. Es ist vorgesehen, dass sowohl die erwähnten radialen als auch die erwähnten axialen Elemente einander gegenüberstehen, wodurch ein winkelförmiger Spalt gebildet wird, der demzufolge eine Labyrinthdichtung realisiert.

Insbesondere kann der Radial-Klappenrand mit dem Axial-Klappenrand einen Winkel α einschließen. Der Winkel α ist insbesondere 90° groß, kann jedoch auch von der Rechtwinkligkeit abweichen. Dementsprechend schließt die radiale Schließfläche mit der axialen Schließfläche einen Winkel β ein, der vorzugsweise ebenfalls 90° groß ist, jedoch auch von der Rechtwinkligkeit abweichen kann. Insbesondere ist der Winkel α ebenso groß oder etwa ebenso groß wie der Winkel β ausgebildet, wodurch in Schließstellung der Absperrklappe ein gleichmäßig dimensionierter Winkelspalt realisiert wird.

Die Erfindung sieht vor, dass die Anschlagvorrichtung an einer Wandung des Luftwegs einen Anschlag und an der Absperrklappe einen in Schließstellung gegen den Anschlag tretenden Gegenanschlag aufweist. Anschlag und Gegenanschlag sind relativ klein dimensioniert, wodurch die Anschlagwirkung nicht beeinträchtigt ist, ein Verkleben oder Verkanten und so weiter jedoch vermieden wird. Anschlag und Gegenanschlag treten vorzugsweise im Wesentlichen axial aufeinander. Wenn im Zuge dieser Anmeldung von einer axialen Richtung gesprochen wird, so entspricht diese im Wesentlichen der Richtung der Luftströmung im Luftweg. Unter radialer Richtung wird eine Richtung vom Zentrum des Luftwegs radial nach außen verstanden. Ist der Luftweg im Querschnitt kreisförmig, so weist die radiale Richtung vom Kreismittelpunkt radial weg (360°) nach außen.

Insbesondere ist vorgesehen, dass die mindestens eine Absperrklappe zur Vertikalen derart geneigt schwenkbar gelagert angeordnet ist, dass eine Gewichtskraftkomponente ihres Gewichts die Schließkraft erzeugt. Durch die Schrägstellung der Absperrklappe gegenüber der Vertikalen neigt sie demgemäß zum Zufallen, da ihr Gewicht, d.h., die daraus resultierende Gewichtskraft, in eine in Schließrichtung der Absperrklappe wirkende Komponente zerlegt wird. Zusätzliche Schließelemente, wie beispielsweise die zum Stand der Technik erwähnten Schließfedern, sind daher nicht erforderlich.

Eine Weiterbildung der Erfindung sieht vor, dass die Absperrklappe mindestens ein Zusatzgewicht zur Vergrößerung der Gewichtskraftkomponente aufweist. Dieses Zusatzgewicht befindet sich insbesondere im Bereich des Klappenrandes. Es kann durch einen verdickten Klappenrand gebildet sein, beispielsweise durch Materialanhäufung und/oder Zusatzgewichten. Bei einer Materialanhäufung und/oder Zusatzgewichten wird ferner ein Versteifungseffekt erzielt und - sofern der Klappenrand in seiner Fläche entsprechend vergrößert wird- auch eine größere Dichtfläche ausgebildet, die zu einer verbesserten Dichtfunktion führt.

Die maximale Öffnungsstellung der Absperrklappe ist vorzugsweise durch Anlage eines Klappenanschlags der Absperrklappe an einem Klappengegenanschlag des Luftwegs definiert. In der maximalen Öffnungsstellung treten nur Klappenanschlag und Klappengegenanschlag aufeinander, wobei diese beiden Elemente hinsichtlich ihres Kontaktes ebenfalls sehr klein ausgebildet sind, wodurch eine Leichtgängigkeit gewährleistet ist und erhalten bleibt. Der Öffnungswinkel φ in der maximalen Öffnungsstellung der Absperrklappe ist kleiner 90°, vorzugsweise circa 60 bis 80°, insbesondere 75°. Der Öffnungswinkel φ ist zwischen Schließstellung und maximaler Öffnungsstellung der Absperrklappe ausgebildet.

Nach einer Weiterbildung der Erfindung ist vorgesehen, dass zwei Absperrklappen vorliegen, deren Schwenkachsen benachbart und vorzugsweise parallel zueinander liegen. Die beiden Schwenkachsen liegen jeweils an einem Seitenrand der zugeordneten Absperrklappe, wobei die verbleibenden freien Randzonen der Absperrklappe den bereits erwähnten Klappenrand bilden. Die die Schwenkachsen aufweisenden Seitenränder der beiden Absperrklappen liegen so nahe beieinander, dass nur ein Minimalspalt zwischen ihnen ausgebildet ist.

Insbesondere ist vorgesehen, dass die beiden Absperrklappen jeweils einen etwa halbkreisförmigen, den Klappenrand bildenden Umrissbereich aufweisen und zusammen den etwa im Querschnitt kreisförmigen Luftweg verschließen.

Die beiden Absperrklappen sind vorzugsweise identisch ausgebildet. Sie sind vollsymmetrisch ausgebildet. Sie werden -da die eine Klappe im Uhrzeigersinn und die andere Klappe im Gegenuhrzeigersinn öffnet- um 180° verdreht zueinander angeordnet, d.h., ihre beiden Schwenkachsen liegen parallel benachbart zueinander. Im Bereich der beiden Schwenkachsen grenzen die beiden Absperrklappen in Schließstellung derart eng aneinander, dass sie sich berühren, fast berühren und/oder etwas überlappen, sodass sie dicht oder nahezu dicht schließen.

Die Zeichnungen veranschaulichen die Erfindung anhand eines Ausführungsbeispiels und zwar zeigt:
- Figur 1: eine Rückschlagklappenvorrichtung in Schließstellung an einem Einbauwandventilator,
- Figur 2: die Anordnung der Figur 1 mit geöffneter Rückschlagklappenvorrichtung,
- Figur 3: eine Detailansicht der Anordnung der Figur 1,
- Figuren 4 und 5: Schnittansichten durch eine Absperrklappe und eine Wandung eines Luftwegs der Rückschlagklappenvorrichtung,
- Figur 6A: eine Detailansicht der Lagerung zweier maximal geöffneter Absperrklappen der Rückschlagklappenvorrichtung,
- Figur 6B: eine Figur 6A entsprechende Ansicht, jedoch mit geschlossenen Absperrklappen,
- Figur 7: eine Draufsicht auf eine Absperrklappe und
- Figuren 8 und 9: die Anordnung der Figur 1 in Rückansicht im drehschiefen Einbau.

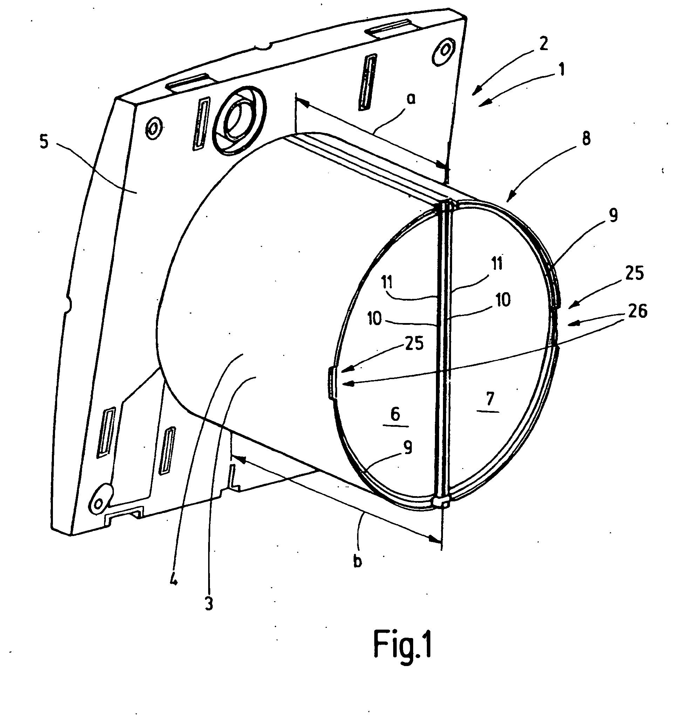

Die Figur 1 zeigt eine lufttechnische Einrichtung 1, die als Wandeinbauventilator 2 ausgebildet ist. Der Wandeinbauventilator 2 weist einen Luftkanalanschlussstutzen 3 auf, der einen Luftweg 4 bildet. Innerhalb des Luftkanalanschlussstutzen 3 ist ein elektrischer Antriebsmotor mit einem Lüfterrad angeordnet, wobei das Lüfterrad im Betrieb Luft durch einen Lufteinlass einer Wandabdeckung 5 ansaugt und über den Luftkanalanschlussstutzen 3 in ein an diesen angeschlossenen Abluftkanal oder dergleichen fördert.

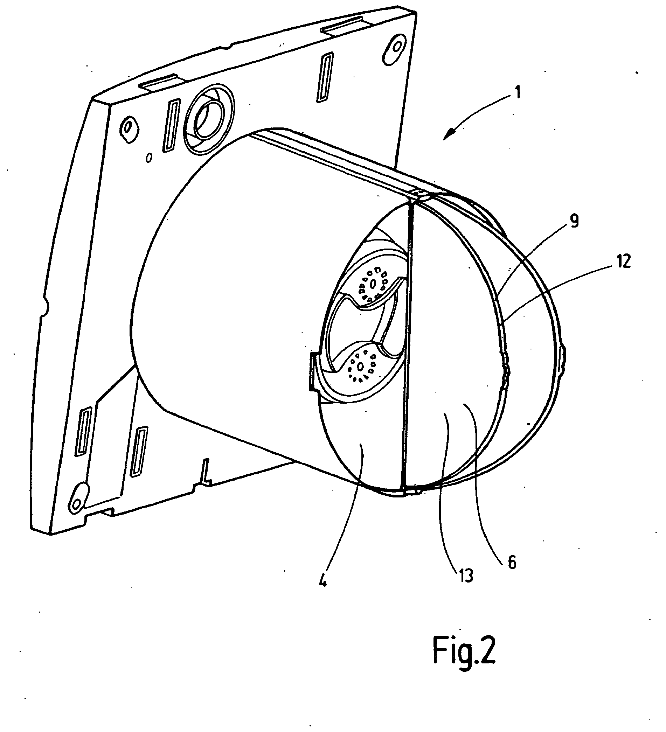

Im Luftanschlussstutzen 3, der gleichzeitig auch ein Motorgehäuse für einen mit Lüfterrad versehenen Elektromotor (nicht dargestellt) bildet, befinden sich zwei Absperrklappen 6 und 7, die zusammen mit dem Luftweg 4 eine Rückschlagklappenvorrichtung 8 bilden. Die beiden Absperrklappen 6 und 7, die sich am freien Ende des Luftanschlussstutzens 3 befinden, weisen jeweils einen etwa halbkreisförmigen Außenumrissbereich 9 und einen geradlinig verlaufenden Außenumrissbereich 10 auf, wobei in der in Figur 1 dargestellten Schließstellung der beiden Absperrklappen 6 und 7 diese zusammen den etwa im Querschnitt kreisförmigen Luftweg 4 verschließen. Die beiden Absperrklappen 6 und 7 weisen im Bereich (insbesondere in Verlängerung) ihrer geradlinig verlaufenden Außenumrissbereiche 10 jeweils Schwenkachsen 11 auf, sodass sie -wie aus der Figur 2 hervorgeht- im Betrieb des Wandeinbauventilators 2 durch den geförderten Luftstrom in maximale Offenstellung schwenken und daher den Luftweg 4 freigeben. Sollte sich bei ausgeschaltetem oder eingeschaltetem Wandeinbauventilator 2 ein hinreichend großer Gegendruck in dem Abluftkanal aufbauen, so wird dieser durch ein Schließen der Absperrklappen 6 und 7 abgeschottet (Figur 1), sodass keine Luftrückströmung erfolgen kann. Aus der Figur 1 ist ersichtlich, dass die beiden Absperrklappen 6 und 7 gegenüber der horizontalen Richtung schräg verlaufend angeordnet sind. Der Winkel gegenüber der Horizontalen beträgt circa 6 bis 45°, insbesondere 8 bis 25°, vorzugsweise etwa 8,5°. Er wird dadurch bewirkt, dass der Luftkanalanschlussstutzen 3 im oberen Bereich das Maß a und im unteren Bereich das Maß b aufweist, wobei a kürzer als b ist. Dies hat zur Folge, dass jede der beiden Absperrklappen 6, 7 bei abgeschaltetem Wandeinbauventilator durch eine Gewichtskraftkomponente ihres jeweiligen Gewichts geschlossen wird, d.h., die jeweilige Gewichtskraftkomponente erzeugt eine Schließkraft auf die entsprechende Absperrklappe 6, 7, sodass keine zusätzlichen Schließmittel, wie beispielsweise Federn oder dergleichen, erforderlich sind.

Da die beiden Absperrklappen 6 und 7 identisch ausgebildet sind, wird nachstehend zumeist nur auf die Ausgestaltung der Absperrklappe 6 eingegangen. Entsprechendes gilt dann für die Ausgestaltung der Absperrklappe 7.

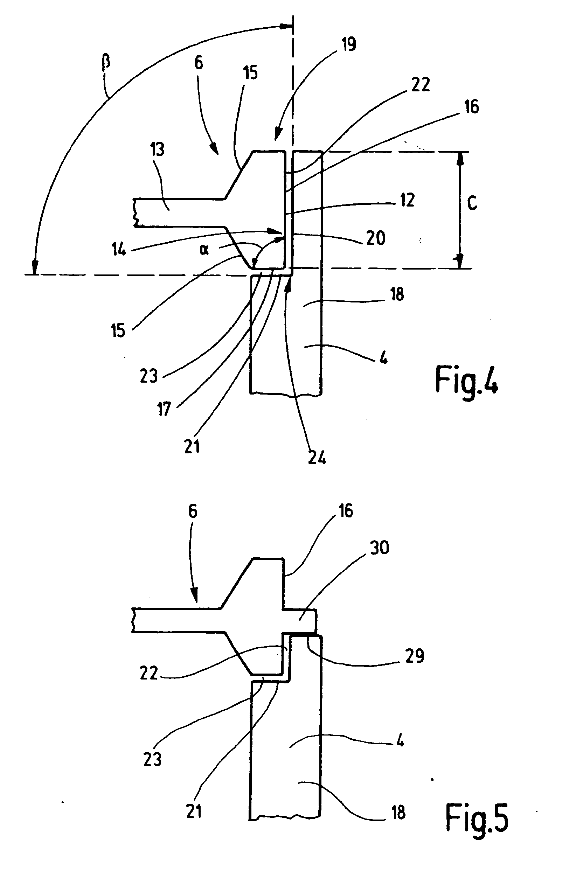

Gemäß Figur 2 weist die Absperrklappe 6 einen Klappenrand 12 auf, der den Außenumrissbereich 9 bildet. An den verdickt ausgebildeten Klappenrand 12 grenzt einstückig ein ebenes, dünneres Klappenblatt 13 an. In der Schließstellung der Klappe 6 liegt der Klappenrand 12 einer Schließfläche 14 des Luftwegs 4 gemäß Figur 4 gegenüber. Aus dieser Figur 4 ist ersichtlich, dass das Klappenblatt 13 in den verdickten Klappenrand 12 beidseitig über Schrägflächen 15 übergeht, sodass ein relativ breiter (Maß c) Radial-Klappenrand 16 ausgebildet wird. Der Klappenrand 12 weist ferner einen Axial-Klappenrand 17 auf, wobei der Radial-Klappenrand 16 mit dem Axial-Klappenrand 17 einen Winkel α einschließt, der 90° groß ist. Der Luftweg 4, der kreisförmig gestaltet ist, weist an seiner Wandung 18 innen eine ringstufenförmige Ausnehmung 19 auf, die dazu führt, dass die Schließfläche 14 eine radiale Schließfläche 20 und eine axiale Schließfläche 21 besitzt. Die radiale Schließfläche 20 schließt mit der axialen Schließfläche 21 einen Winkel β ein, der 90° groß ist.

Die Anordnung ist gemäß Figur 4 nun derart getroffen, dass in Schließstellung der Absperrklappe 6 der Radial-Klappenrand 16 der radialen Schließfläche 20 mit Spiel, also unter Ausbildung eines Radialspalts 22 gegenüberliegt. Der Axial-Klappenrand 17 liegt der axialen Schließfläche 21 ebenfalls mit Spiel gegenüber, sodass ein Axialspalt 23 ausgebildet wird, wobei Radialspalt 22 und Axialspalt 23 winkelförmig zueinander verlaufen und daher einen Winkelspalt 24 bilden. Obwohl zwischen der Absperrklappe 6 und dem Luftweg 4 der umlaufende Winkelspalt 24 besteht, ist eine hinreichende Dichtwirkung gegeben, da das Spaltmaß relativ klein ist und durch die Winkelbildung auch noch labyrinthartig wirkt.

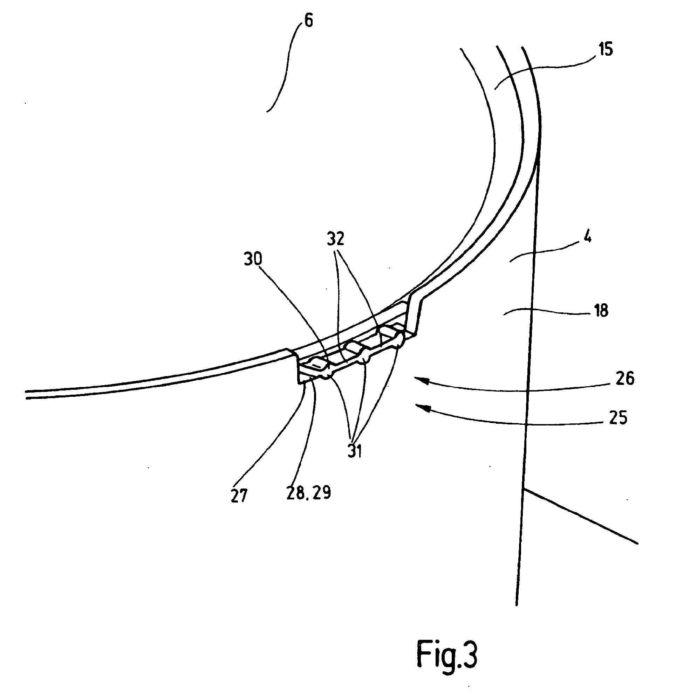

In einer Mittelzone 25 des Klappenrands 9 weist die Klappe 6 gemäß der Figuren 1 und 3 eine Anschlagvorrichtung 26 auf, die die Schließstellung der Absperrklappe 6 definiert. Hierzu ist die Wandung 18 des Luftwegs 4 mit einer randoffenen Ausnehmung 27 versehen, wobei der Ausnehmungsgrund 28 einen Anschlag 29 bildet. Der Anschlag 29 befindet sich auf einem Höhenniveau (in axialer Richtung), dass er der Absperrklappe 6 in Schließstellung gegenüberliegt. Hierzu wird insbesondere auf die Figur 5 verwiesen, die einen Radialschnitt durch die Anschlagvorrichtung 26 der sich in Schließstellung befindlichen Absperrklappe 6 zeigt. Das Niveau des Anschlags 29 liegt -in axialer Richtung gesehen- mit Abstand zur axialen Schließfläche 21, derart, dass auch im Bereich der Anschlagvorrichtung 26 der Axialspalt 23 und ein (verkleinerter) Abschnitt des Radialspalts 22 ausgebildet wird. Am Radial-Klappenrand 16 der Absperrklappe 6 befindet sich ein in radialer Richtung weisender Gegenanschlag 30, der gegen den Anschlag 29 in Schließstellung der Absperrklappe 6 axial anliegt. Der Figur 3 ist zu entnehmen, dass sich der Gegenanschlag 30 aus drei Radialstutzen 31 zusammensetzt, die über Stegwände 32 miteinander verbunden sind. Demzufolge erfolgt eine Dreipunktauflage bei der Anschlagvorrichtung 26, nämlich Aufsetzen der Mantelwände der drei Radialstege 31 auf die ebene Fläche des Anschlags 29.

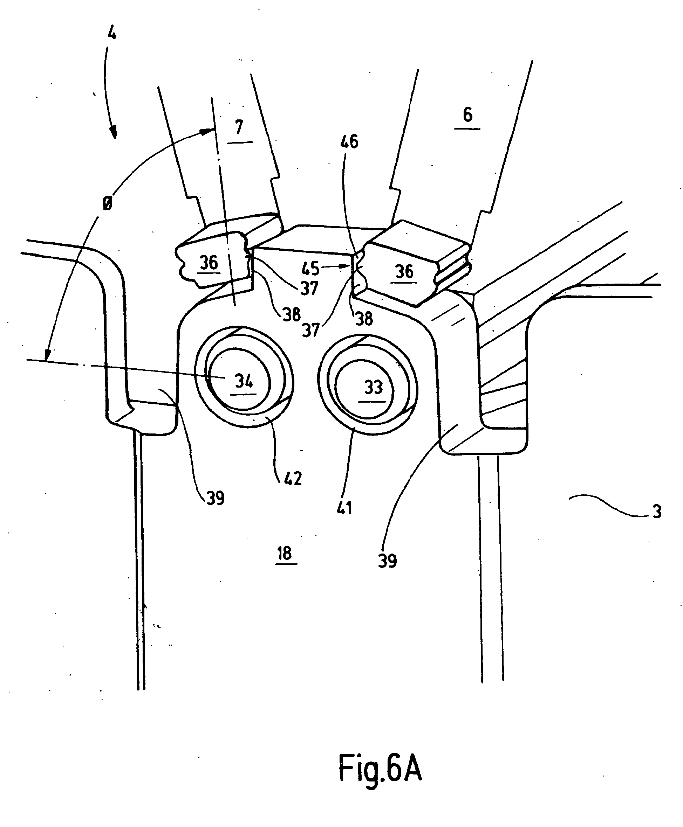

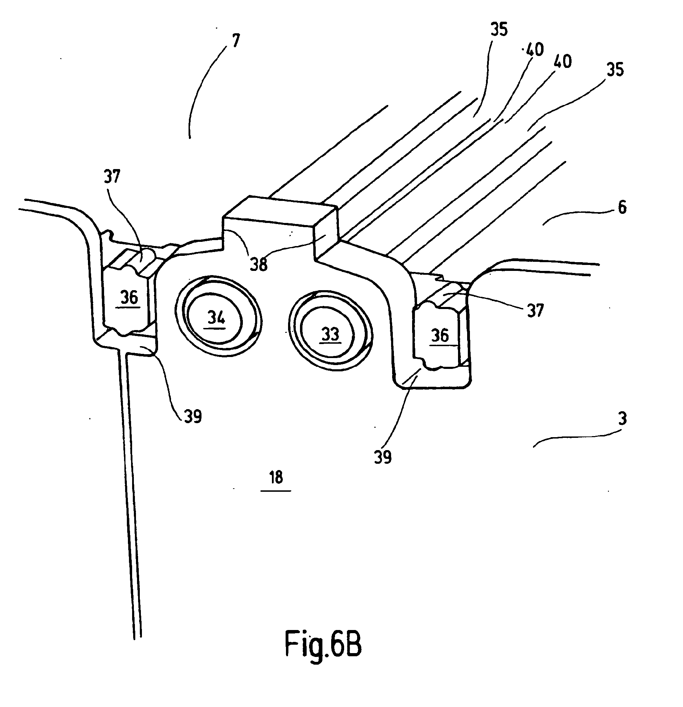

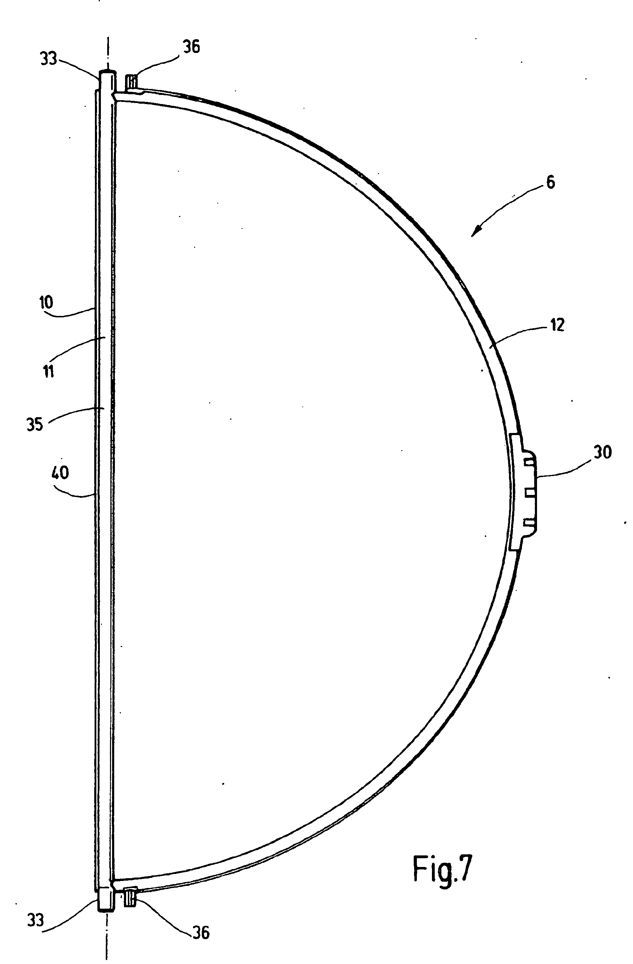

In der Figur 7 ist eine Draufsicht auf die Absperrklappe 6 gezeigt. Deutlich ist der verdickte Klappenrand 12 und der Gegenanschlag 30 erkennbar. Ferner sind zur Ausbildung der Schwenkachse 11 zwei Achsstutzen 33 ersichtlich, die über eine Randzonenverdickung 35, die sich benachbart zum Außenumrissbereich 10 über dessen gesamte Länge erstreckt, verbunden sind. Die Randzonenverdickung 35 sorgt für mechanische Stabilität. Sie befindet sich nicht direkt am Außenumrissbereich 10, sondern geringfügig beabstandet dazu, da der Außenumrissbereich 10 von einem Klappenrandstreifen 40 gebildet wird, der für ein optimales Dichten in Schließstellung der Absperrklappen 6, 7 sorgt. Die Durchmesser der beiden Achsstutzen 33 sind gleich groß ausgebildet. Neben den Achsstutzen 33 befindet sich jeweils mit Abstand ein Offenstellungsanschlag 36, der einen Klappenanschlag 45 bildet und deutlich aus den Figuren 6A, 6B und 7 hervorgeht. Der Offenstellungsanschlag 36 weist einen Vorsprung 37 auf, der in Offenstellung der Absperrklappe 6 auf eine einen Klappengegenanschlag 46 bildende Stirnwandung 38 der Wandung 18 des Luftwegs 4 linienartig oder punktartig aufsetzt und auf diese Art und Weise eine weitere Öffnungsbewegung verhindert. Die Stirnwand 38 erstreckt sich in Richtung der Längserstreckung des Luftkanalanschlussstutzen 3. Der Öffnungswinkel φ ist < 90° (Figur 6A) ausgebildet. Er beträgt vorzugsweise 75°. In der Schließstellung der Absperrklappen 6 und 7 liegt der jeweilige Offenstellungsanschlag 36 mit seinem Vorsprung 37 in jeweils einer Rand-Aufnahmeausnehmung 39 der Wandung 18 des Luftwegs 4 berührungslos ein. Der Achsstutzen 33 wird beim Einsetzen der Absperrklappe 6 in eine Lagerbohrung 41 der Wandung 18 eingeschoben. Der gegenüberliegende Achsstutzen 33 wird in eine entsprechende Lagerbohrung 41 der Wandung 18 eingesteckt. Für das Einstecken wird die Absperrklappe 6 elastisch gebogen; nach dem Einstecken federt sie in ihre ebene Ausgangslage zurück. Entsprechendes gilt für das Einstecken der beiden Achsstutzen 34 der Absperrklappe 7 in Lagerbohrung 42.

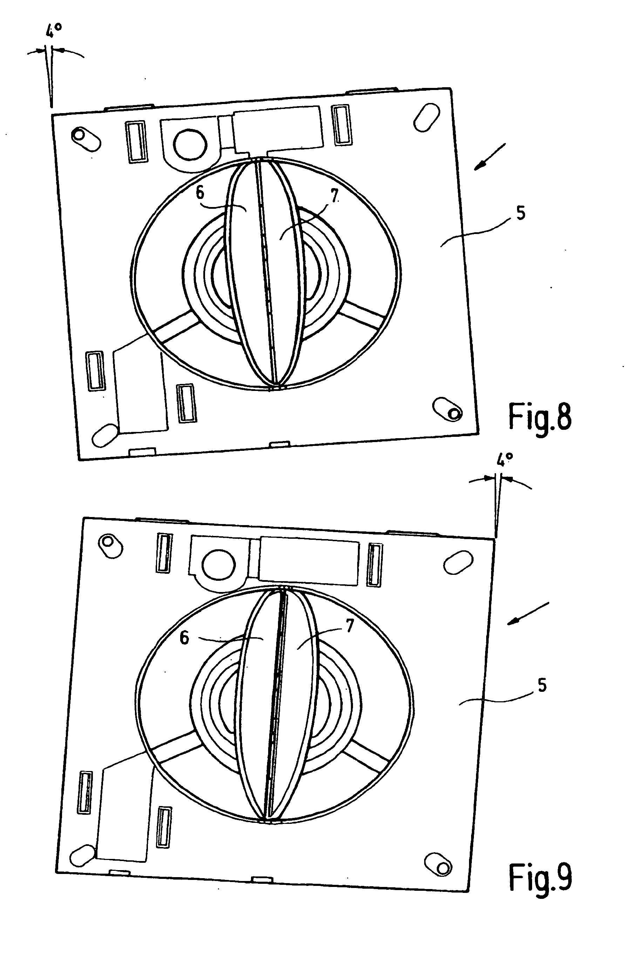

Die Figuren 8 und 9 zeigen eine Rückansicht auf die lufttechnische Einrichtung 1, wobei in der Figur 8 der Wandeinbau des Wandeinbauventilators 4 nicht in horizontaler und vertikaler Richtung genau ausgerichtet erfolgt ist, sondern ein schiefer Einbau, nämlich geneigt im Gegenuhrzeigersinn, vorliegt. Dementsprechend zeigt die Figur 9 eine nicht gewünschte Einbaulage, die im Uhrzeigersinn um einen Winkel verdreht erfolgt ist. Überschreitet der Verdrehwinkel einen Wert von circa 4° im Gegenuhrzeigersinn oder Uhrzeigersinn nicht, so ist dennoch die Funktion der Klappen 6 und 7 hinsichtlich ihrer durch Gewichtskraft erfolgenden Selbstschließung gegeben.

Die Rückschlagklappenvorrichtung eignet sich sowohl für den Wandeinbau -wie vorstehend bereits beschriebenals auch für den Deckeneinbau. Der Mindestdruck zum Öffnen bis in maximale Offenstellung beträgt circa 2 bis 3 Pa. Die Anordnung der beiden Absperrklappen 6 und 7 ist derart gewählt, dass sie sich in ihren Offenstellungen nicht berühren. Die beiden Absperrklappen 6 und 7 sind identisch ausgebildet, sodass eine einfache Fertigung und vertauschungsfreie Montage möglich ist. Durch das Spiel zwischen den Klappenrändern und den Schließflächen ist eine erhöhte Reibung oder Blockierung vermieden. Selbst Verschmutzung wie Staub, Haarspray und so weiter führen nicht zu einer Fehlfunktion.

Die Rückschlagklappenvorrichtung besteht aus Metall und/oder Kunststoff, vorzugsweise gänzlich aus Kunststoff.

## Patentansprüche

1. Luftweg (4) mit einer Rückschlagklappenvorrichtung zum Verschließen desselben , mit mindestens einer Absperrklappe (6,7), die von einer im Luftweg (4) strömenden Luftströmung entgegen einer Schließkraft geöffnet wird, wobei der Luftweg (4) an seiner Wandung (18) innen eine ringstufenförmige Ausnehmung (19) aufweist, die zur Ausbildung einer eine Radial-Schließfläche (20) und eine Axial-Schließfläche (21) aufweisenden Schließfläche (14) führt, die Absperrklappe (6,7) einen Klappenrand (12) aufweist, der -in Schließstellung der Absperrklappe (6,7)- der Schließfläche (14) des Luftwegs (4) mit radialem und axialem Spiel gegenüberliegt, mindestens eine die Schließstellung definierende Anschlagvorrichtung (26) vorgesehen ist, deren Erstreckung in Richtung des Verlauf des Klappenrands (12) kleiner, insbesondere wesentlich kleiner, als die Länge des Klappenrands (12) ist, die Anschlagvorrichtung (26) an der Wandung (18) des Luftwegs (4) einen Anschlag (29) und an der Absperrklappe (6,7) einen in Schließstellung gegen den Anschlag (29) tretenden Gegenanschlag (30) aufweist, und wobei der Anschlag (29) vom Ausnehmungsgrund (28) einer an der Wandung (18) des Luftwegs (4) ausgebildeten, randoffenen Ausnehmung (27) und der Gegenanschlag (30) am Radial-Klappenrand (16) der Absperrklappe (6) in radiale Richtung weisend ausgebildet sind.

2. Luftweg (4) mit einer Rückschlagklappenvorrichtung nach einem der vorhergehenden Ansprüche, **dadurch gekennzeichnet, dass** der Radial-Klappenrand (16) mit dem Axial-Klappenrand (17) einen Winkel α einschließt.

3. Luftweg (4) mit einer Ruckschlagklappenvorrichtung nach einem der vorhergehenden Ansprüche, **dadurch gekennzeichnet, dass** die Radial-Schließfläche (20) mit der Axial-Schließfläche (21) einen Winkel β einschließt.

4. Luftweg (4) mit einer Rückschlagklappenvorrichtung nach den Ansprüchen 2 und 3, **dadurch gekennzeichnet, dass** der Winkel a ebenso groß oder etwa ebenso groß wie der Winkel β ist.

5. Luftweg (4) mit einer Rückschlagklappenvorrichtung nach einem der vorhergehenden Ansprüche, **dadurch gekennzeichnet, dass** Anschlag (29) und Gegenanschlag (30) im Wesentlichen axial aufeinander treffen.

6. Luftweg (4) mit einer Rückschlagklappenvorrichtung nach einem der vorhergehenden Ansprüche, **dadurch gekennzeichnet, dass** die mindestens eine Absperrklappe (6,7) zur Vertikalen derart geneigt schwenkbar gelagert angeordnet ist, dass eine Gewichtskraftkomponente ihres Gewichts die Schließkraft erzeugt.

7. Luftweg (4) mit einer Rückschlagklappenvorrichtung nach Anspruch 6, **dadurch gekennzeichnet, dass** die Absperrklappe (6,7) mindestens ein Zusatzgewicht zur Vergrößerung der Gewichtskraftkomponente aufweist.

8. Luftweg (4) mit einer Rückschlagklappenvorrichtung nach Anspruch 7, **dadurch gekennzeichnet, dass** das Zusatzgewicht durch einen verdickten, versteiften und/oder die Dichtfläche (14,16) vergrößernden Klappenrand (12) gebildet ist.

9. Luftweg (4) mit einer Rückschlagklappenvorrichtung nach Anspruch 7, **dadurch gekennzeichnet, dass** das Zusatzgewicht durch den Gegenanschlag (30) gebildet ist.

10. Luftweg (4) mit einer Rückschlagklappenvorrichtung nach einem der vorhergehenden Ansprüche, **dadurch gekennzeichnet, dass** die maximale Öffnungsstellung der Absperrklappe (6,7) durch Anlage eines Klappenanschlags (45) der Absperrklappe (6,7) an einem Klappengegenanschlag (46) des Luftwegs (4) definiert ist.

11. Luftweg (4) mit einer Rückschlagklappenvorrichtung nach einem der vorhergehenden Ansprüche, **dadurch gekennzeichnet, dass** der Öffnungswinkel Φ in der maximalen Öffnungsstellung der Absperrklappe (6,7) < 90°, vorzugsweise circa 60 bis 80°, insbesondere 75°, beträgt.

12. Luftweg (4) mit einer Rückschlagklappenvorrichtung nach einem der vorhergehenden Ansprüche, **gekennzeichnet durch** zwei Absperrklappen (6,7), deren Schwenkachsen benachbart und vorzugsweise parallel zueinander liegen.

13. Luftweg (4) mit einer Rückschlagklappenvorrichtung nach einem der vorhergehenden Ansprüche, **dadurch gekennzeichnet, dass** die beiden Absperrklappen (6,7) jeweils einen etwa halbkreisförmigen, den Klappenrand (12) bildenden Außenumrissbereich (9) aufweisen und zusammen den etwa im Querschnitt kreisförmigen Luftweg (4) verschließen.

14. Luftweg (4) mit einer Rückschlagklappenvorrichtung nach einem der vorhergehenden Ansprüche, **dadurch gekennzeichnet, dass** die beiden Absperrklappen (6,7) identisch ausgebildet sind.

## Claims

1. An air path (4) comprising a check valve device for closing said air path, comprising at least one shut-off flap (6, 7), which is opened against a closing force by an air flow, which flows in the air path (4), wherein, on the inside of its wall (18), the air path (4) encompasses an annular step-shaped recess (19), which leads to the embodiment of a closing area (14), which encompasses a radial closing area (20) and an axial closing area (21), the shut-off flap (6, 7) encompasses a flap edge (12), which - in closed position of the shut-off valve (6, 7) - is located opposite the closing area (14) of the air path (4) with radial and axial play, with provision being made for at least one stop device (26), which defines the closed position and the extension of which in the direction of the course of the flap edge (12) is smaller, in particular significantly smaller, than the length of the flap edge (12), with the stop device (26) encompassing a stop (29) at the wall (18) of the air path (4) and a counter stop (30), which, in closed position, counters the stop (29), at the shut-off flap (6, 7), and wherein the stop (29) is embodied by the recess base (28) of a recess (27), which has an open edge and which is embodied at the wall (18) of the air path (4), and the counter stop (30) is embodied at the radial valve edge (16) of the shut-off valve (6) so as to point in radial direction.

2. The air path (4) comprising a check valve device according to any one of the preceding claims, **characterized in that** the radial flap edge (16) draws an angle α with the axial flap edge (17).

3. The air path (4) comprising a check valve device according to any one of the preceding claims, **characterized in that** the radial closing area (20) draws an angle β with the axial closing area (21).

4. The air path (4) comprising a check valve device according to claims 2 and 3, **characterized in that** the angle α is as large as or approximately as large as the angle β.

5. The air path (4) comprising a check valve device according to any one of the preceding claims, **characterized in that** stop (29) and counter stop (30) meet one another substantially axially.

6. The air path (4) comprising a check valve device according to any one of the preceding claims, **characterized in that** the at least one shut-off flap (6, 7) is arranged so as to be pivotably supported to the vertical so as to be inclined such that a weight component of its weight creates the closing force.

7. The air path (4) comprising a check valve device according to claim 6, **characterized in that** the shut-off flap (6, 7) encompasses at least one additional weight for increasing the weight component.

8. The air path (4) comprising a check valve device according to claim 7, **characterized in that** the additional weight is formed by means of a flap edge (12), which is thickened, reinforced and/or which increases the sealing area (14, 16).

9. The air path (4) comprising a check valve device according to claim 7, **characterized in that** the additional weight is formed by the counter stop (30).

10. The air path (4) comprising a check valve device according to any one of the preceding claims, **characterized in that** the maximum opening position of the shut-off flap (6, 7) is defined by the attachment of a valve stop (45) of the shut-off flap (6, 7) to a flap counter stop (46) of the air path (4).

11. The air path (4) comprising a check valve device according to any one of the preceding claims, **characterized in that** the opening angle Φ in the maximum open position of the shut-off flap (6, 7) is < 90°, preferably approximately 60 to 80°, in particular 75°.

12. The air path (4) comprising a check valve device according to any one of the preceding claims, **characterized by** two shut-off flaps (6, 7), the pivot axes of which are located adjacent and preferably parallel to one another.

13. The air path (4) comprising a check valve device according to any one of the preceding claims, **characterized in that** the two shut-off flaps (6, 7) in each case encompass an approximately semicircular outer contour area (9), which forms the flap edge (12), and together close the air path (4), which has an approximately circular cross section.

14. The air path (4) comprising a check valve device according to any one of the preceding claims, **characterized in that** the two shut-off flaps (6, 7) are embodied identically.

## Revendications

1. Voie d'air (4) avec un dispositif de clapet antiretour pour fermer celle-ci, comprenant au moins un clapet d'arrêt (6, 7) qui est ouvert par un courant d'air circulant dans la voie d'air (4) à l'encontre d'une force de fermeture, dans laquelle la voie d'air (4) présente à l'intérieur sur sa paroi (18) un évidement en forme de gradin annulaire (19) qui conduit à la réalisation d'une surface de fermeture (14) présentant une surface de fermeture radiale (20) et une surface de fermeture axiale (21), le clapet d'arrêt (6, 7) présente un bord de clapet (12) qui est opposé, en position de fermeture du clapet d'arrêt (6, 7), à la surface de fermeture (14) de la voie d'air (4) avec un jeu radial et axial, au moins un dispositif de butée (26) définissant la position de fermeture est prévu dont le prolongement en direction de l'étendue du bord de clapet (12) est inférieur, notamment nettement inférieur, à la longueur du bord de clapet (12), le dispositif de butée (26) présente sur la paroi (18) de la voie d'air (4) une butée (29) et sur le clapet d'arrêt (6, 7) une butée conjuguée (30) venant contre la butée (29) en position de fermeture, et dans lequel la butée (29) est réalisée par la base d'évidement (28) d'un évidement (27) à bord ouvert, réalisé sur la paroi (18) de la voie d'air (4) et la butée conjuguée (30) est réalisée sur le bord de clapet radial (16) du clapet d'arrêt (6) tournée en direction radiale.

2. Voie d'air (4) avec un dispositif de clapet antiretour selon l'une quelconque des revendications précédentes, **caractérisée en ce que** le bord de clapet radial (16) inclut un angle α avec le bord de clapet axial (17).

3. Voie d'air (4) avec un dispositif de clapet antiretour selon l'une quelconque des revendications précédentes, **caractérisée en ce que** la surface de fermeture radiale (20) inclut un angle β avec la surface de fermeture axiale (21).

4. Voie d'air (4) avec un dispositif de clapet antiretour selon les revendications 2 et 3, **caractérisée en ce que** l'angle α est aussi grand ou à peu près aussi grand que l'angle β.

5. Voie d'air (4) avec un dispositif de clapet antiretour selon l'une quelconque des revendications précédentes, **caractérisée en ce que** butée (29) et butée conjuguée (30) convergent de manière essentiellement axiale.

6. Voie d'air (4) avec un dispositif de clapet antiretour selon l'une quelconque des revendications précédentes, **caractérisée en ce que** l'au moins un clapet d'arrêt (6, 7) est disposé pour être logé à pivotement de manière inclinée par rapport à la verticale de telle sorte qu'une composante de poids de son poids génère la force de fermeture.

7. Voie d'air (4) avec un dispositif de clapet antiretour selon la revendication 6, **caractérisée en ce que** le clapet d'arrêt (6, 7) présente au moins un poids supplémentaire en vue d'agrandir la composante de poids.

8. Voie d'air (4) avec un dispositif de clapet antiretour selon la revendication 7, **caractérisée en ce que** le poids supplémentaire est formé par un bord de clapet (12) épaissi, renforcé et/ou agrandissant la surface d'étanchéité (14, 16).

9. Voie d'air (4) avec un dispositif de clapet antiretour selon la revendication 7, **caractérisée en ce que** le poids supplémentaire est formé par la butée conjuguée (30).

10. Voie d'air (4) avec un dispositif de clapet antiretour selon l'une quelconque des revendications précédentes, **caractérisée en ce que** la position d'ouverture maximale du clapet d'arrêt (6, 7) est définie par l'appui d'une butée de clapet (45) du clapet d'arrêt (6, 7) sur une butée conjuguée de clapet (46) de la voie d'air (4).

11. Voie d'air (4) avec un dispositif de clapet antiretour selon l'une quelconque des revendications précédentes, **caractérisée en ce que** l'angle d'ouverture <1> dans la position d'ouverture maximale du clapet d'arrêt (6, 7) se monte à < 90°, de préférence environ 60 à 80°, notamment 75°.

12. Voie d'air (4) avec un dispositif de clapet antiretour selon l'une quelconque des revendications précédentes, **caractérisée par** deux clapets d'arrêt (6, 7) dont les axes de pivotement se situent de manière voisine et de préférence parallèle l'un à l'autre.

13. Voie d'air (4) avec un dispositif de clapet antiretour selon l'une quelconque des revendications précédentes, **caractérisée en ce que** les deux clapets d'arrêt (6, 7) présentent chacun une région de contour externe (9) approximativement semi-circulaire, formant le bord de clapet (12) et enferment ensemble la voie d'air (4) approximativement circulaire en coupe transversale.

14. Voie d'air (4) avec un dispositif de clapet antiretour selon l'une quelconque des revendications précédentes, **caractérisée en ce que** les deux clapets d'arrêt (6, 7) sont réalisés de manière identique.
